# FASCICULE DE BREVET EUROPEEN

(11) **EP 4 511 247 B1**
(45) Date de publication et mention de la délivrance du brevet: **20.05.2026**
(21) Numéro de dépôt: 23721325.1
(22) Date de dépôt: 20.04.2023
(51) Int. Cl.: B60K 15/07

(54) **RÉSERVOIR AMOVIBLE POUR VÉHICULE, NOTAMMENT AUTOMOBILE, ET VÉHICULE ÉQUIPÉ D'AU MOINS UN TEL RÉSERVOIR**
ABNEHMBARER BEHÄLTER FÜR EIN FAHRZEUG, INSBESONDERE FÜR EIN KRAFTFAHRZEUG, UND FAHRZEUG MIT MINDESTENS EINEM SOLCHEN BEHÄLTER
REMOVABLE TANK FOR A VEHICLE, IN PARTICULAR FOR A MOTOR VEHICLE, AND VEHICLE PROVIDED WITH AT LEAST ONE SUCH TANK

(30) Priorité: 21.04.2022 FR 2203707
(43) Date de publication de la demande: 26.02.2025
(73) Titulaire: Annajah Motors, 75008 Paris (FR)
(72) Inventeur: ANNAJAH, Faouzi, 60590 Flavacourt (FR); DE LIGNAUD DE LUSSAC, Thomas, 75014 Paris (FR); DIBOINE, Alain, 91190 Gif-sur-Yvette (FR)
(74) Mandataire: Oak & Fox
(86) Numéro de dépôt international: PCT/EP2023/060222
(87) Numéro de publication internationale: WO 2023/203114

(56) Documents cités:
- EP-A1- 1 437 252
- DE-A1- 102007 051 311
- US-A1- 2010 051 567

## Description

L'invention concerne un réservoir pour véhicule, notamment automobile, qui est conçu pour être amovible, c'est-à-dire pour pouvoir s'insérer dans un véhicule et se retirer du véhicule.

Le réservoir est conçu pour stocker un carburant, permettant le fonctionnement du véhicule, et en particulier de l'hydrogène.

L'invention se rapporte ainsi, en particulier, aux véhicules automobiles fonctionnant à l'hydrogène.

On connait des véhicules automobiles électriques fonctionnant à l'hydrogène : ils sont usuellement équipés d'une pile à combustible et d'un réservoir à hydrogène. L'hydrogène, ou plus précisément le dihydrogène, est utilisé comme combustible réducteur utilisé par la pile à combustible, et permet la propulsion du véhicule.

La distance que peut parcourir un tel véhicule est au mieux environ de 700 km. Un autre objectif de l'invention est de proposer un véhicule, équipé d'un réservoir amovible, pour permettre un ravitaillement par remplacement de réservoir.

Pour parcourir plus de 700 km, il est donc nécessaire de remplir de nouveau le réservoir : des stations-services dédiées à remplissage de l'hydrogène proposent ou proposeront ce service. Néanmoins, il existe très peu de ces stations et le déploiement est lent, rendant la recharge en hydrogène sous pression aléatoire sur les territoires

L'invention a pour objectif de proposer une solution qui permette La recharge en hydrogène sous pression même dans des zones non équipées de station-service dédiées

On connait du document FR 2 850 062, ou du document EP1 437 252, un véhicule automobile comportant une pile à combustible et un réservoir à hydrogène, monté amovible. Le réservoir est ainsi mobile dans le véhicule entre une position suivant laquelle il est connecté à un conduit d'alimentation et une position suivant laquelle il est déconnecté du conduit pour être extrait du véhicule, pour son remplacement.

Le réservoir d'hydrogène peut ainsi être remplacé quand il est vide, ce qui peut permettre de réduire le temps de charge du véhicule.

Néanmoins, comme l'indique ce document FR 2 850 062, le réservoir amovible est lourd et il est nécessaire de prévoir des moyens d'aide à l'extraction du réservoir pour l'utilisateur.

Pour ce faire, le document FR 2 850 062 enseigne une solution permettant de faciliter la préhension du réservoir: le véhicule comporte des bras télescopiques, solidaires d'un élément de structure du véhicule, et des moyens de fixation amovible du réservoir sur ces bras (le réservoir est porté par les deux bras fixés de part et d'autre du réservoir). Ces bras permettent d'écarter le réservoir de sa position de connexion (au fond d'un logement prévu dans le véhicule), pour l'amener dans une position où il est plus facilement saisissable Dans les faits, le remplacement du réservoir amovible est réalisé par une machine, car il est trop encombrant et trop lourd pour être saisi et déplacé par une personne. Ainsi, le remplacement du réservoir décrit dans le document FR 2 850 062 et EP 1 437 252 n'est pas ou peu facile à réaliser manuellement. L'invention propose un perfectionnement à cette solution, offrant davantage de sécurité pour l'utilisateur et permet le remplacement du réservoir amovible manuellement.

On connait du document US 2010 051567 une installation pour maintenir et déplacer une bouteille de propane entre une première position opérationnelle et une seconde position inférieure de chargement/déchargement par rapport à une structure de support d'un chariot élévateur. L'installation comprend un élément de base adapté pour être relié à la structure de support de chariot élévateur, un berceau pour supporter le cylindre entre les première et seconde positions, et des premier et second bras de pivot ayant une première extrémité reliée de manière pivotante à l'élément de base et une seconde extrémité de manière pivotante connecté au berceau. Dans la première position, le berceau est dans une orientation horizontale. Dans la deuxième position, le berceau est dans une orientation verticale. Le mouvement angulaire des premier et deuxième bras pivotants provoque la rotation du berceau entre les orientations généralement horizontale et généralement verticale. Ce document ne décrit pas un réservoir amovible rechargeable pour véhicule notamment automobile électrique, mais il enseigne une solution possible de conception de réservoir amovible d'une structure.

On connait enfin du document DE 10 2007 51311 un réservoir à carburant avec au moins une interface pour un module de pile à combustible, l'interface permettant d'alimenter au moins le module de pile à combustible avec du carburant et l'interface permet un couplage amovible du module de pile à combustible au réservoir de carburant. Le document décrit également un module de pile à combustible et un procédé pour fournir au moins un module de pile à combustible prêt à fonctionner ou en fonctionnement. la pile à combustible 14 présente une poignée positionnée sur le dessus du réservoir et comporte deux parties qui sont monté pivotantes - le pivotement des deux parties permet l'ouverture partielle d'un volet de la pile.

L'invention concerne à cet effet un réservoir amovible rechargeable, pour véhicule notamment automobile électrique, ledit réservoir comportant un corps de réservoir apte à contenir un gaz sous pression et un premier connecteur de délivrance, fixé à une première extrémité dudit corps de réservoir et apte à être associé à un second connecteur dont est équipé un véhicule automobile, l'association des premier et second connecteurs autorisant une entrée et/ ou une sortie dudit gaz sous pression contenu dans ledit corps dudit réservoir. Conformément à l'invention, le réservoir amovible est remarquable en ce que ledit corps de réservoir est de forme allongée et présente un axe de corps, en ce que ledit corps est entouré d'une enveloppe latérale de protection dudit corps, ladite enveloppe étant coaxiale audit corps et comportant :
- une premier extrémité d'enveloppe, entourant au moins partiellement ladite première extrémité de corps, ladite première extrémité d'enveloppe étant ouverte pour livrer accès audit premier connecteur de délivrance dudit corps dudit réservoir,
- une seconde extrémité d'enveloppe, entourant au moins partiellement une seconde extrémité dudit corps et comprenant une poignée de préhension dudit réservoir,
ladite enveloppe comportant au moins deux éléments de prise, alignés suivant une direction parallèle à l'axe dudit corps dudit réservoir, les deux éléments étant aptes associer ladite enveloppe avec une navette de positionnement, pour faire reposer ledit réservoir sur ladite navette.

Ainsi réalisé, le réservoir est plus sécurisé et plus facile à positionner dans un véhicule. En effet, L'enveloppe du réservoir constitue un organe de protection du corps du réservoir. De plus les éléments de prise alignés facilitent le positionnement du réservoir dans le véhicule : il est en effet plus facile d'avoir à positionner un objet suivant une seule ligne d'accrochage (alignement suivant la direction axiale) que suivant deux lignes d'accrochage, comme le prévoit la solution de l'Etat de la technique présentée brièvement ci-avant (suspension du réservoir par ses deux bords latéraux sur des rails). Le fait d'avoir une seule ligne d'accrochage permet aussi de positionner facilement le réservoir sur un chariot, par exemple sur une navette comme il sera vu par la suite. Enfin, la poignée d'extrémité facilite le retrait du réservoir du véhicule, par un utilisateur, puisque le réservoir dispose d'un élément conçu pour être saisi, spécifique à la prise en main.

Avantageusement, la première extrémité d'enveloppe s'étend au-delà de ladite première extrémité de corps et forme une jupe de protection autour de ladite première extrémité de corps, ladite jupe constituant un premier élément de prise, apte à venir en prise avec un premier élément d'accrochage de ladite navette. Cette forme particulière de la première extrémité de l'enveloppe a une double fonction : elle permet de protéger le premier connecteur et elle sert de moyen d'accrochage / d'accostage pour associer l'enveloppe du réservoir à une navette, comme il sera vu par la suite.

L'enveloppe peut de préférence comporter un logement, apte à recevoir un pion de ladite navette, ledit logement constituant un second élément de prise. En outre, suivant un mode de réalisation avantageux, l'enveloppe comporte une seconde poignée : cela permet à un utilisateur de saisir à deux mains le réservoir amovible, ce qui le rend encore davantage manipulable, même par une personne de petite corpulence.

Suivant encore un mode de réalisation avantageux, ladite seconde poignée est au moins partiellement escamotable dans une épaisseur de ladite enveloppe. Cela permet à la poignée de ne pas encombrer latéralement le réservoir, pour que le réservoir s'insère bien dans un logement du véhicule.

La seconde extrémité d'enveloppe s'étend avantageusement au-delà de ladite seconde extrémité de corps et définit un volume prolongeant ledit corps. De plus, la première poignée est formée dans ledit volume prolongeant ledit corps, ce qui permet de ne pas encombrer latéralement le réservoir, pour ne pas gêner à l'insertion ou à l'extraction du réservoir du véhicule.

De préférence, le corps présente une masse globale comprise entre sensiblement 1 et 30 Kg : ce poids permet de déplacer facilement le réservoir.

De préférence encore, le corps est équipé d'une soupape de surpression et/ou d'un capteur de pression et/ou d'un capteur de température.

De préférence encore, ladite enveloppe est équipée d'une dispositif d'affichage, apte à indiquer une jauge dudit corps dudit réservoir et ladite enveloppe comprend au moins un témoin d'indication de disfonctionnement dudit connecteur d'extrémité.

En outre, l'enveloppe présente une section de forme polygonale. Ceci permet d'imposer une orientation à l'introduction du réservoir dans un compartiment de forme également polygonale. Notamment, l'orientation peut être assurée par un détrompeur positionné sur l'enveloppe et dans le logement du réservoir amovible. Cette orientation forcée assure un bon positionnement du réservoir et augmente la sécurité dans la fixation du réservoir à l'intérieur du véhicule. L'invention concerne également un véhicule notamment automobile, qui est remarquable en ce qu'il comporte au moins un réservoir amovible tel que défini ci-dessus. Le véhicule conforme à l'invention comporte au moins un compartiment, pour accueillir ledit au moins un réservoir amovible, ledit au moins un compartiment étant équipé dudit au moins un second connecteur, apte à s'associer avec ledit premier connecteur dudit réservoir amovible, ledit au moins un compartiment comportant au moins une navette de positionnement dudit au moins un réservoir, ladite navette étant montée mobile en déplacement sur un rail, entre une position d'accueil dudit au moins un réservoir et une position de connexion dudit au moins un réservoir avec ledit second connecteur, ladite navette comportant des premier et second éléments d'accrochage, venant en prise avec respectivement lesdits au moins deux éléments de prise dudit au moins un réservoir amovible. De plus, ledit véhicule comporte un dispositif motorisé apte à commander le déplacement de ladite navette sur ledit rail, entre ladite position de connexion et ladite position d'accueil, et inversement.

Avantageusement, le rail est orienté suivant une position inclinée par rapport à une direction horizontale quand ledit véhicule repose sur un sol horizontal. L'inclinaison favorise le chargement du réservoir en s'aidant de la gravité. Cela permet également de loger en partie, si besoin est, les réservoirs sous les sièges du véhicule ce qui limite l'encombrement des réservoirs dans le véhicule.

De préférence, le compartiment (qui accueille le réservoir) est situé sous un coffre du véhicule et le compartiment comprend une première porte d'entrée qui est indépendante d'une seconde porte d'entrée du coffre. Cela permet de répondre à des normes de sécurité et également d'accéder plus facilement aux réservoirs que s'ils étaient disposés dans un coffre pouvant également contenir d'autres objets. En effet, le réservoir doit répondre à deux contraintes en cas d'accident :
Pour les petits chocs (jusqu'à 15km/h) le réservoir ne doit pas être touché par une partie de la voiture et rester extractible
Pour les grands chocs réglementaires, il doit rester étanche et ne pas présenter de risque supplémentaire pour l'intégrité de la voiture

Avantageusement, la première porte d'entrée du compartiment est placée à une distance prédéterminée d'au moins 40 cm d'une entrée d'un compartiment individuel, que comporte le compartiment, ladite entrée dudit au moins un compartiment individuel étant définie par une extrémité dudit rail. Cela permet de reculer à minimum l'entrée des réservoirs pour répondre aux normes, mais pas trop pour saisir facilement les réservoirs et les extraire du véhicule lors de leur remplacement.

Suivant un mode de réalisation avantageux, il est prévu que ledit compartiment comporte plusieurs compartiments individuels, chacun comprenant un rail, une navette, un second connecteur et un dispositif motorisé pour positionner et aider à l'extraction dudit réservoir.

Suivant un mode de réalisation préféré, le véhicule comporte un réservoir fixe, ledit au moins un réservoir amovible et ledit réservoir fixe étant reliés respectivement à des circuits d'amenée et de délivrance de gaz sous pression, lesdits circuits étant parallèles entre eux, associés à une entrée commune et une sortie commune et étant équipés de dispositif bypass autorisant le passage du gaz sous pression soit dans un circuit soit dans un autre (toujours séparément, jamais ensemble).

En outre, le véhicule conforme à l'invention peut comporter au moins un organe de sécurité, placé au moins partiellement sous ledit au moins un rail, ledit au moins un organe de sécurité formant poussoir en cas de choc arrière du véhicule, pour forcer ledit au moins un réservoir amovible à pivoter autour d'une extrémité dudit rail et à se positionner suivant une direction sensiblement verticale quand le véhicule est positionné sur un support horizontal. Avantageusement, ledit au moins un organe de sécurité comporte une première partie d'organe apte à se déformer plastiquement, ladite première partie d'organe étant prolongée par une seconde partie d'organe, apte à se déplacer sous l'action d'une poussée de ladite première partie d'organe, après la déformation plastique de ladite première partie d'organe, en cas de choc arrière du véhicule.

Le véhicule conforme à l'invention présente notamment l'avantage de pouvoir être équipé de réservoirs facilement échangeables, même dans des zones géographiques non électrifiées (par exemple dans des villages reculés, des zones de montage difficilement accessible ou dans certaines zones désertiques).

Il répond aussi au besoin de se déplacer grâce à une énergie propre et pratique, pour remplacer le moteur thermique polluant.

Il répond en outre à deux contraintes : celle de la construction complexe et couteuse des stations-services et celle qui est liée à la mobilité électrique qui limite l'autonomie, dont le temps de charge est long et dont les batteries sont une source de pollution.

L'invention permet de transporter et distribuer l'hydrogène sous pression, sous forme de bouteilles qu'on peut facilement livrer à proximité de l'utilisateur (soit à domicile, soit par des distributeurs dédiés).

Ce qui permet à l'utilisateur de faire l'échange de bouteilles d'hydrogène vides contre des bouteilles pleines et placer celles-ci directement dans son véhicule par un geste simple et rapide.

L'invention permet de démocratiser l'accès à l'hydrogène et ne pas compter seulement sur les complexes et couteuses stations-services à hydrogène en nombre trop bien trop restreint.

De plus le mode de recharge des bouteilles d'hydrogène interchangeables de l'invention est flexible et polyvalent :
Elles peuvent être soit changées contre des pleines lorsqu'elles sont vides soient remplies de façon classique dans une station-service hydrogène dédiée, sans être retirées de leur compartiment.

D'autres avantages et caractéristiques de l'invention apparaîtront à l'examen de la description détaillée d'un mode de mise en œuvre nullement limitatif, et des dessins annexés, sur lesquels :
[Fig. 1] est une vue en perspective de l'arrière d'un véhicule conforme à l'invention, montrant un coffre ouvert et un compartiment arrière ouvert, dans lequel est inséré plusieurs réservoirs amovibles conformes à l'invention,
[Fig. 2] est une vue en perspective d'un réservoir amovible conforme à l'invention,
[Fig. 3] est une vue de dessus du réservoir amovible montré en figure 2,
[Fig. 4] est une vue en coupe schématique du réservoir montré en figures 2 et 3, monté sur une platine,
[Fig. 5] est une vue en perspective d'une première extrémité du réservoir, monté sur une platine, elle-même monté sur un rail,
[Fig. 6] est une vue en coupe, de dessous et en perspective du réservoir montré en figure 5, illustrant le fond d'un compartiment, le rail, la platine et une partie de l'enveloppe d'un réservoir conforme à l'invention,
[Fig. 7] est une représentation schématique des étapes de positionnement d'un réservoir amovible dans un compartiment du véhicule et de retrait du réservoir amovible,
[Fig. 8] est une vue représentation schématique des relations fluidiques entre un réservoir principal fixe que comporte le véhicule conforme à l'invention et un réservoir amovible,
[Fig. 9] est une vue en perspective de l'arrière d'un véhicule conforme à l'invention, et
[Fig. 10] est une représentation schématique d'un élément de sécurité que comporte un véhicule suivant un mode de réalisation avantageux.

Dans la description qui suit, les termes « inférieur », « supérieur », « gauche », « droite » etc... sont utilisés en référence aux dessins pour une plus grande facilité de compréhension. Ils ne doivent pas être compris comme étant des limitations de la portée de l'invention.

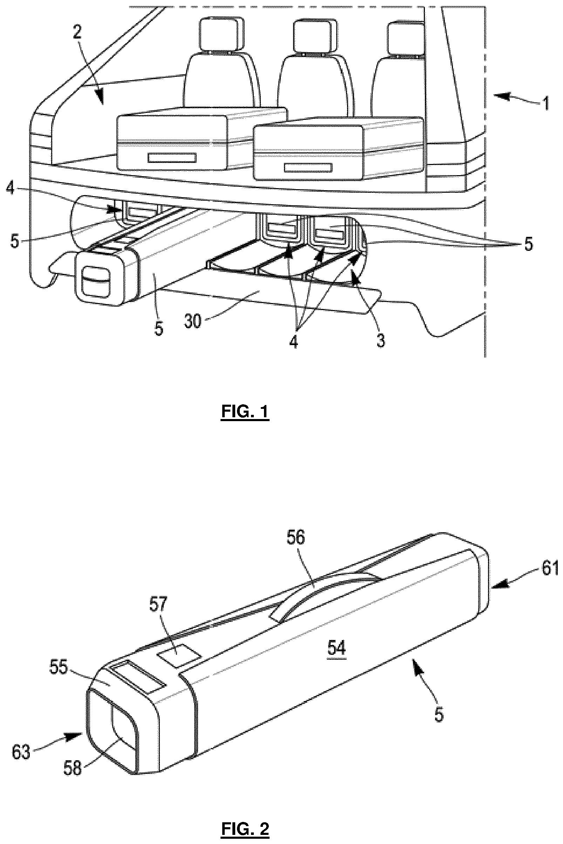

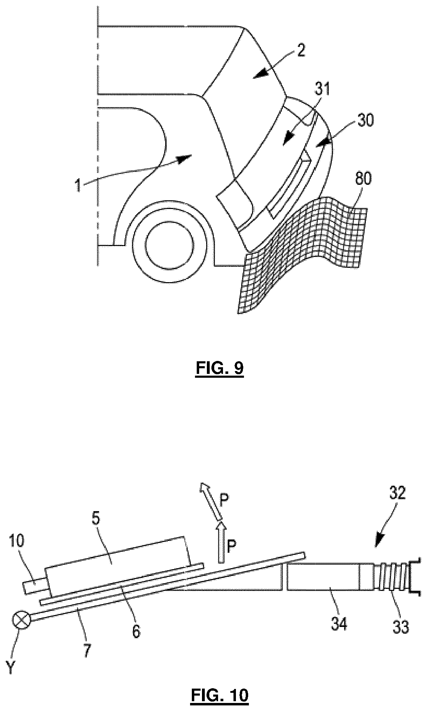

Les figures 1 et 9 montrent un exemple de véhicule automobile conforme à l'invention.

Le véhicule conforme à l'invention est un véhicule électrique alimenté par de l'hydrogène. Il comporte une pile à combustible et un réservoir à hydrogène permettant le fonctionnement de la pile à combustible, produisant de l'énergie électrique pour la propulsion du véhicule.

La pile à combustible et le moteur électrique n'ont pas été représentés sur les figures pour en simplifier la lecture, l'invention ne portant pas sur ces éléments. Le véhicule 1 conforme à l'invention est illustré de sorte à observer sa partie arrière : il comporte, de façon classique en soi, un coffre 2 illustré en position ouverte et accueillant des bagages. La porte du coffre 2 n'est pas représentée. Sous le coffre, on observe un grand compartiment 3, comprenant des petits compartiments 4 (ou compartiments individuels 4) alignés les uns à côté des autres, chacun accueillant un réservoir 5 amovible, cinq réservoirs 5 étant entièrement positionnés dans leur compartiment 4 associé (seulement quatre réservoirs sont visibles) et un sixième réservoir 5 est illustré en étant partiellement inséré dans son compartiment 4.

Il devra être compris que le véhicule pourrait ne comporter qu'un seul compartiment 3, sans sortir du cadre de l'invention.

Tous les réservoirs 5 sont des réservoirs d'hydrogène sous pression. Ils sont tous montés amovibles dans leur compartiment 4 associé, les compartiments 4 étant prévus dans l'espace situé sous le coffre dont l'accès est indépendant de celui du coffre.

En effet, l'espace situé sous le coffre comprend sa propre porte d'accès 30, montrée en position ouverte. Dans cette position, la porte 30 est orientée sensiblement suivant un plan horizontal (le véhicule étant lui-même installé sur un plan sensiblement horizontal) et peut servir de support plan pour aider au retrait ou au positionnement du ou des réservoirs amovibles dans leur compartiment.

Pour des raisons de respect de normes, eu égard à la sécurité, on notera que la porte d'entrée 30 du compartiment est placée à une distance prédéterminée de l'entrée de chaque compartiment 4 : autrement dit, le grand compartiment 3 présente un espace libre entre la porte 30 et l'entrée de chacun des compartiments 4 qu'il comporte, de sorte que, quand les réservoirs amovibles sont insérés dans leur compartiment 4, ils se trouvent à distance de la porte 30. Il est avantageusement prévu que l'entrée des compartiments individuels soit écartée de la porte 30 d'une distance d'au moins 40 cm : en cas de chocs arrière à 15km/h, aucune partie de la structure de la voiture ne doit entrer en contact avec les réservoirs amovibles ou avec les compartiments les accueillant. La distance prévue entre la porte 30 et l'entrée des compartiments individuels assure cette exigence sécuritaire.

Le fond de chaque compartiment 4 est équipé d'un connecteur qui est relié à un conduit permettant d'amener le gaz sous pression (l'hydrogène) vers la pile à combustible du véhicule et également l'arrivée d'hydrogène permettant la recharge des réservoirs amovibles sur le véhicule.

Pour ce faire, chaque réservoir amovible est équipé d'un autre connecteur, conçu pour s'associer au connecteur du fond de chaque réservoir, et pour autoriser le passage du gaz sous pression du réservoir vers le conduit d'amenée ou du conduit d'amenée vers le réservoir (dans le cas particulier de remplissage qui sera vu par la suite). Pour des raisons pratiques de compréhension, le connecteur du réservoir amovible sera appelé premier connecteur et le connecteur du fond du compartiment 4 est appelé second connecteur.

Il va maintenant être fait référence au réservoir amovible 5 de façon plus détaillée : les figures 2, 3 et 4 illustrent un exemple de réalisation d'un tel réservoir amovible 5.

De façon à être facilement manipulables par un utilisateur, les réservoirs 5 sont conçus pour faire sensiblement moins de 20 kg, et de préférence entre 8 et 15 kg (le poids des réservoirs est ainsi bien compris entre 1 et 30 kg)

Ils comportent chacun 500g d'hydrogène sous pression (sous 700 bars ou 700 X 10⁵ Pa) : il est en effet plus facile de manipuler plusieurs réservoirs de 8 kg à 15 kg que de manipuler un seul réservoir de plus de 50 kg.

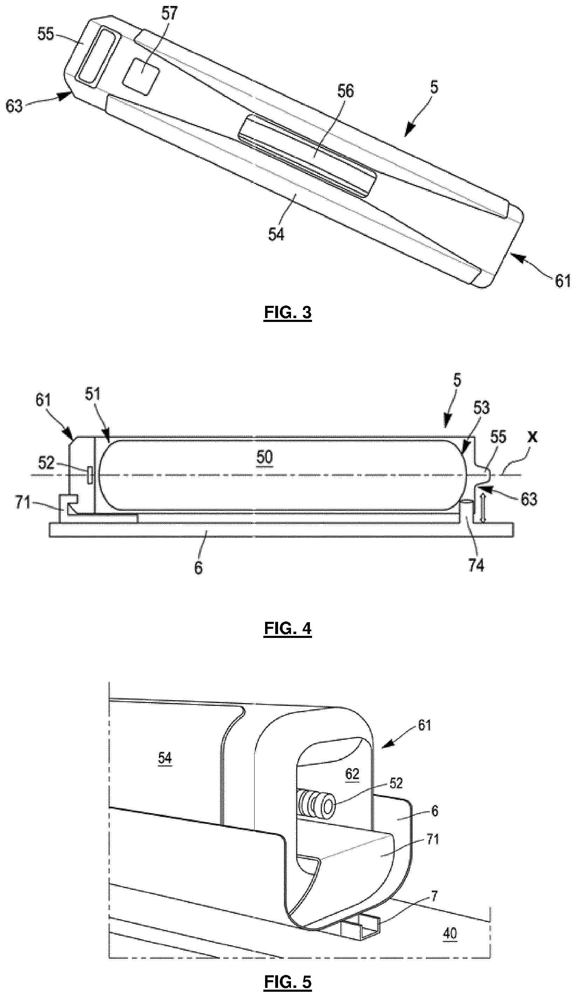

Sur la figure 4, le réservoir amovible 5 comporte un corps 50 de réservoir, destiné à contenir et conserver l'hydrogène sous pression.

Le corps 50 est de forme général cylindrique. Il est ainsi de forme allongée et présente un axe X de corps de réservoir.

Il présente une première extrémité de corps 51 qui est équipée du premier connecteur 52, évoqué ci-avant, assurant la sortie ou l'entrée du dihydrogène dans le corps 50 quand il est associé au second connecteur prévu au fond des compartiments 4.

La seconde extrémité 53 du corps 50 est de forme bombée.

Pour renforcer la sécurité du réservoir et faciliter sa manipulation, le réservoir comporte une enveloppe 54 latérale de protection, enfermant au moins partiellement le corps du réservoir, et qui présente certaines particularités.

Dans le cadre de ce mode de réalisation particulier, l'enveloppe 54 est intégrale.

Tout d'abord, l'enveloppe 54 comprend un manchon qui entoure latéralement le corps 50 du réservoir.

Le manchon de l'enveloppe s'étend de la première extrémité 51 (correspondant à la première extrémité 61 de l'enveloppe) jusqu'à la seconde extrémité 53 du corps 50 (seconde extrémité 63 de l'enveloppe).

L'enveloppe a ainsi une première fonction qui vise à sécuriser le corps du réservoir, de le protéger de tout choc éventuel.

L'enveloppe 54 est de section polygonale, pour imposer un sens d'orientation du réservoir 5 dans son compartiment 4, lui aussi de forme polygonale.

Dans le cadre de cet exemple de réalisation, l'enveloppe 54 présente une forme de parallélépipède, avec une section rectangulaire ou carrée. La longueur totale du réservoir amovible 5 est de sensiblement 80 cm, la largeur est sensiblement de 15 cm et la hauteur est sensiblement de 15 cm également. La première extrémité 61 de l'enveloppe est ouverte, pour livrer accès au premier connecteur 52.

La seconde extrémité 63 de l'enveloppe est partiellement ouverte : elle s'étend au-delà du fond du corps 50 du réservoir et forme, autour de l'extrémité 53 du corps, un volume dans lequel est prévu une poignée de préhension 55 du réservoir amovible 5 : ainsi, le fond du réservoir (seconde extrémité 53 de l'enveloppe) qui se présente face à l'utilisateur qui regarde les compartiment 4 recevant les réservoirs amovibles 5, est aisément saisissable par l'utilisateur en s'aidant de la poignée.

L'enveloppe 54 a donc également pour fonction de permettre ou de faciliter la saisie manuelle du réservoir 5.

Le manchon latéral de l'enveloppe 54 comporte également, dans le cadre d'un mode de réalisation avantageux, une seconde poignée 56, visible en particulier sur les figures 2 et 3, la présence de deux poignées permettant de saisir facilement et confortablement à deux mains le réservoir amovible 5.

Cette poignée centrale permet aussi de porter de façon aisée un réservoir à bout de bras, comme un petit sac, à une main lors de l'échange d'un réservoir vide contre un réservoir plein.

Pour permettre une introduction sans encombre du réservoir 5 dans son compartiment 4, il est prévu que la seconde poignée 56 soit escamotable dans l'épaisseur de la paroi de l'enveloppe : ainsi, quand la seconde poignée 56 n'est pas utilisée, elle peut être rangée dans un logement prévu dans l'épaisseur de l'enveloppe, et ne fait pas saillie à l'extérieure de la surface de l'enveloppe latérale 54, de sorte qu'elle ne génère aucun frottement ou aucun impact contre la paroi interne du compartiment 4 accueillant le réservoir amovible 5.

Pour rendre plus facile l'insertion et le retrait du réservoir 5 dans le compartiment 4, l'enveloppe est conçue pour être positionnée sur une navette 6 montée mobile sur un rail 7.

Un détrompeur sur le réservoir et son vis-à-vis sur le logement impose un positionnement fixe et répétable sur la navette sans risque d'erreur.

Le rail 7 est fixé dans le fond 40 d'un compartiment 4 et s'étend de l'entrée du compartiment jusqu'au fond du compartiment.

Le rail 7 est de préférence un rail motorisé. Le rail 7 présente la particularité d'être incliné par rapport à l'horizontal, comme il sera vu par la suite.

Ainsi conçu, le positionnement du réservoir sur la navette est simple : il suffit de faire reposer le réservoir 5 sur la navette de façon appropriée, ce qui est plus aisé que de suspendre un réservoir sur des rails latéraux au réservoir, comme il est prévu dans l'art antérieur présenté ci-avant.

Pour faire reposer de façon appropriée le réservoir 5 sur la navette, il est prévu que l'enveloppe 54 comporte aux moins deux éléments de prise, alignés suivant une direction parallèle à l'axe du corps du réservoir, les deux éléments de prise étant conçus pour s'associer à deux éléments d'accrochage que comporte la navette 6.

Suivant le mode de réalisation présenté (mais non limitatif), un élément de prise est perpendiculaire et l'autre est parallèle à l'axe du corps du réservoir. La présence d'au moins deux éléments de prise évite tout pivot ou tout mouvement du réservoir par rapport à la navette 6 : ainsi, quand le réservoir 5 est associé à la navette, il est orienté de façon précise, sans possibilité de bouger.

On peut ainsi précisément contrôler le déplacement du réservoir grâce au déplacement de la navette, et amener le réservoir (et en particulier le premier connecteur 52) à une position précise au fond du compartiment 4 (et en particulier précisément en face du second connecteur non illustré sur les figures).

Les premiers et second connecteurs 52 sont des connecteurs fluidiques rapides, qui se verrouillent automatiquement à l'insertion mais qui nécessitent un déverrouillage motorisé, par sécurité.

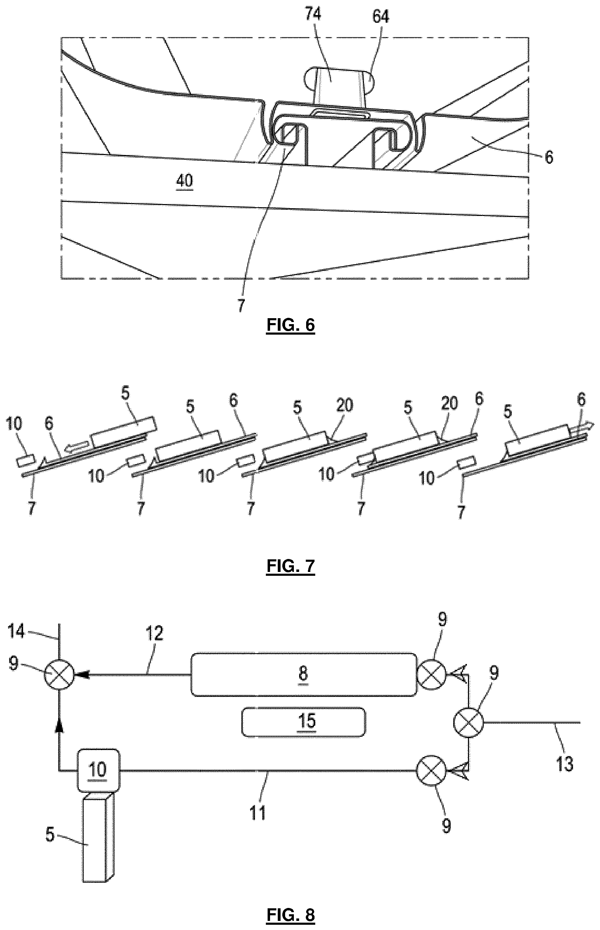

Les deux éléments de prise de l'enveloppe 54 du réservoir 5 sont illustrés en figures 5 et 6 :
Le premier élément de prise est réalisé par la première extrémité 61 de l'enveloppe, qui se prolonge au-delà de l'extrémité 51 du corps 50 du réservoir, formant une jupe de protection 62 autour du premier connecteur 52 : la jupe de protection 62 évite les chocs sur le connecteur 52.

La jupe de protection 62 constitue également un premier élément de prise avec un élément d'accrochage 71 solidaire de la navette : cet élément 71 est réalisé par une pièce d'extrémité de la navette, formant un crochet, venant entourer la jupe 62 de l'extrémité 61 de l'enveloppe 54.

Ainsi, pour positionner le réservoir 5 dans la navette 6, il faut pousser l'extrémité du réservoir 5 jusqu'à l'extrémité de la navette pour insérer la jupe 62 de l'extrémité 61 de l'enveloppe 54 dans l'élément d'accrochage 71 de la navette 6.

Le second élément de prise de l'enveloppe 54 est un logement 64 ménagé à travers la paroi de l'enveloppe 54, et qui est apte à accueillir un pion 74 qui fait saillie du fond de la navette 6 (voir figure 6) : le pion 74 peut s'insérer dans le logement 64 de l'enveloppe quand l'extrémité 61 est en prise avec l'élément d'accrochage 71 de la navette.

On remarque que le pion 74 est aligné avec l'élément d'accrochage 71, tout comme le logement 64 (second élément de prise) de l'enveloppe du réservoir 5 est aligné avec la jupe 62 (second élément de prise) suivant une direction axiale, parallèle à l'axe du corps du réservoir amovible 5.

Pour faciliter le positionnement du pion 74 dans le logement 64, il peut être prévu que le pion soit rétractable (par exemple en étant associé avec un élément élastiquement déformable, de type ressort ou en motorisant l'insertion du pion74 dans le logement 64).

Le corps 50 du réservoir est équipé d'une soupape de surpression, d'un capteur de pression et d'un capteur de température (non illustrés). Le capteur de pression et le capteur de température sont aptes à communiquer les informations de pression et de température à un module, le module pouvant délivrer les informations à un utilisateur au moyen d'un écran 57 ou 58, par exemple. Le module pourrait également transmettre des informations émises sur un écran dans le véhicule ou sur l'écran d'un smartphone, grâce à une application dédiée.

La soupape de surpression assure la libération du dihydrogène sous pression stockée dans le corps si la pression détectée excède une pression critique, au-delà de laquelle l'intégrité du réservoir pourrait ne plus être assurée créant un risque pour l'utilisateur.

Le dispositif d'affichage 57 du module peut être prévu sur le manchon de l'enveloppe 54, comme montré en figures 2 ou 3.

Il peut aussi être prévu à la seconde extrémité 63 de l'enveloppe, (dispositif d'affichage 58) de sorte que, quand le réservoir amovible 5 se trouve dans son compartiment 4, l'utilisateur peut prendre connaissance d'informations sur la pression ou sur la température, sur la jauge etc., sans avoir à retirer le réservoir amovible 5.

Dans ce cadre de ce mode de réalisation précis, il est prévu deux écrans : un écran (ou dispositif d'affichage) 57 prévu sur le manchon et indiquant à l'utilisateur la jauge du réservoir et un écran 58, à l'extrémité 63 de l'enveloppe (recouvrant le fond du corps 50) qui sert à indiquer à l'utilisateur si le réservoir est correctement placé sur la navette et éventuellement si le premier connecteur présente un problème pouvant entrainer un risque.

L'écran d'affichage pourrait être remplacé par des indicateurs visuels colorés, par exemple des LED, sans sortir du cadre de l'invention : de tels indicateurs constituent des témoins d'un disfonctionnement éventuel de certains éléments du réservoir, comme le connecteur 52 d'extrémité, par exemple.

Il va maintenant être fait référence à la figure 7, montrant les différents positionnements de la navette dans le compartiment 4, pour l'introduction du réservoir.

Comme il a été évoqué précédemment, et comme on peut le voir sur la figure 7, le rail 7 est incliné par rapport à l'horizontal quand le véhicule est positionné sur un sol horizontal. L'inclinaison du rail 7 peut, par exemple, être comprise de préférence entre 5 et 45° par rapport à l'horizontal.

La navette 6 est montée mobile en déplacement sur le rail 7, entre une position d'accueil du réservoir 5 et une position de connexion du réservoir 5 avec un dispositif 10 équipé du second connecteur, venant s'associer au premier connecteur 52.

La figure 7 est lue de gauche à droite.

Dans un premier temps, la navette 6 est en position d'accueil : le réservoir 5 est amené sur la navette 6.

Dans un second temps, le réservoir 5 est placé sur la navette 6 : il s'agit de la position d'accostage, suivant laquelle la position du réservoir est verrouillée sur la navette 6. Symboliquement, l'élément d'accrochage 71 a été représenté par un triangle.

On détecte ainsi le bon positionnement du réservoir par rapport à la navette 6. Quand cette détection est faite, un dispositif motorisé entraine le déplacement de la navette 6, de sa position d'accueil à sa position de connexion. Pour ce faire, une cale 20 a été illustrée en position arrière du réservoir : la cale 20 illustre schématiquement un dispositif d'enclenchement qui va venir exercer une poussée sur la navette pour amener le réservoir en position de connexion. La cale 20 peut être réalisée par le pion 74 (c'est-à-dire que le pion 74 et la cale 20 pourrait être le même objet), mais elle peut également être indépendante du pion 74.

Le troisième temps illustre le déplacement de la navette vers la position de connexion. L'inclinaison du rail 7 favorise également ce déplacement.

Le quatrième temps montre la navette en position de connexion et le réservoir connecté au dispositif 10, ce qui signifie que les premier et second connecteurs du corps du réservoir 5 et du dispositif 10, sont parfaitement assemblés. Le dispositif motorisé 20 assure encore une poussée nécessaire à l'enclenchement des connecteurs l'un avec l'autre en fin de déplacement de la navette ainsi que la sécurité du verrouillage.

Le cinquième temps illustre la sortie du réservoir 5 du compartiment 4 : le dispositif motorisé s'aide alors de l'élément d'accrochage 71 pour pousser l'ensemble navette 6/ réservoir 5 vers l'entrée du compartiment 4.

On remarque que, dans le cadre de cet exemple, la navette est déplacée au-delà de sa position d'accueil (étape 1) puisqu'elle sort au moins partiellement du rail pour déplacer le réservoir au plus près de l'utilisateur, en le sortant au moins partiellement de son compartiment 4.

Il devra être compris que chaque compartiment est équipé d'un rail 7, d'une navette 6 et d'un dispositif motorisé (symbolisé au moins partiellement par la présence de la cale 20).

Il va maintenant être fait référence à la figure 8 pour décrire une autre particularité du véhicule conforme à l'invention.

Suivant un mode de réalisation avantageux, il est prévu que le véhicule comporte non seulement des réservoirs amovibles 5, mais également un réservoir fixe 8, en lieu et place du (ou des) réservoir(s) fixe(s) usuel(s) prévu(s) dans les véhicules électriques fonctionnant à l'hydrogène.

Ce réservoir fixe 8 se remplit de la même façon que les réservoirs classiques, en stations-services dédiées, et l'entrée du réservoir est équipée d'une buse de ravitaillement spéciale pour l'hydrogène.

Ce réservoir fixe contient environ 4 kg à 5 kg de dihydrogène.

Le réservoir est également relié à la pile à combustible de façon classique.

La particularité de l'invention est d'avoir associé deux circuits fluidiques pour alimenter et vider le réservoir fixe 8 et les réservoirs amovibles 5 : la figure 8 illustre l'architecture générale du montage réalisé.

L'ensemble des circuits fluidiques comporte des dispositifs 9 de type bypass, qui sont actionnés pour laisser passer l'hydrogène dans un conduit ou dans un autre pour permettre soit de remplir (ou de vider) les réservoirs amovibles 5 (un seul a été représenté sur la figure 8 mais les six réservoirs amovibles sont en théorie alignés suivant le circuit fluidique 11) soit de remplir (ou de vider) le réservoir fixe 8, en commandant le passage d'hydrogène dans le circuit fluidique 12.

Une entrée principale 13 est prévue pour l'ensemble des deux circuits 11 et 12, cette entrée 13 étant reliée à la buse de ravitaillement présentée plus haut. L'entrée principale 13 comporte un premier dispositif Bypass, pour autoriser le passage de l'hydrogène soit dans le conduit du circuit fluidique 11 soit dans le conduit du circuit fluidique 12.

Deux autres dispositifs bypass sont prévus en entrée de chacun des circuits fluidiques 11 et 12, et des capteurs de pression sont prévus entre le dispositif bypass situé en entrée principale 13 et chacun des dispositifs bypass situés en entrée des circuits fluidiques 11 et 12, pour permettre une sécurité supplémentaire en cas de fuite.

Deux autres dispositifs bypass sont prévus en sortie des circuits fluidiques 11 et 12.

Les circuits fluidiques 11 et 12 sont montés en parallèle et rejoignent un conduit d'alimentation général 14 de la pile à combustible (non illustrée).

Un module de commande électronique 15 contrôle la pression à l'entrée de chaque circuit fluidique (grâce aux capteurs qui renseignent le module de commande 15) et contrôle également le fonctionnement des dispositifs bypass pour que le remplissage des réservoirs fixe et amovibles soit conforme au procédé suivant :
La séquence de remplissage commence par le réservoir fixe 8 (les dispositifs bypass n'autorisant que le passage de dihydrogène vers le réservoir fixe 8 à travers le circuit fluidique 12), jusqu'à atteindre 700 bars de pression.

Puis, le remplissage des réservoirs amovibles 5 est réalisé, en autorisant uniquement le passage de dihydrogène dans le circuit fluidique 11 : les réservoirs sont remplis en cascade (le module de commande détectant les réservoirs vides à remplir).

Il devra être compris que la séquence de remplissage décrite ci-dessus n'est pas une limitation de l'invention, et que le remplissage pourrait se dérouler de façon différente, sans sortir du cadre de l'invention.

Pour alimenter la pile à combustible, le procédé mis en œuvre par le module de commande 15 est le suivant :
Ce sont les réservoirs amovibles qui alimentent la pile à combustible en premier, l'un après l'autre. Toutefois, le dernier de la série des six réservoirs amovibles 5 est gardé plein et sert de réserve de secours (permettant au véhicule de parcourir entre 50 et 70 km).

Pour permettre ceci, les dispositifs bypass en sortie des circuits fluidiques 11 et 12 sont commandés pour autoriser d'abord le passage de l'hydrogène provenant des cinq premiers réservoirs amovibles et interdisant le passage d'hydrogène du circuit 12).

Puis, quand les cinq premiers réservoirs amovibles 5 sont vidés, le module de commande 15 autorise le passage de l'hydrogène en provenance du circuit 12 (stocké dans le réservoir 8) vers la pile à combustible.

Quand l'utilisateur du véhicule souhaite faire le plein, il peut ainsi soit remplacer les réservoirs amovibles 5 vides par d'autres réservoirs amovibles 5 pleins, ou remplir le réservoir fixe 8 et les réservoirs amovibles 5 à la pompe, suivant le temps dont il dispose et les moyens techniques proposés par la station (réservoirs amovibles pleins en stock, pompe disponible etc.).

Les réservoirs amovibles seront également disponibles dans des distributeurs automatiques peu couteux et faciles à installer en comparaison des stations hydrogènes classiques. L'emplacement, la disponibilité, le règlement de ces distributeurs de réservoirs amovibles pourra se faire grâce à une application digitale dédiée sur smartphone ou autre dispositif adéquat.

Il est à noter que, grâce à la simplicité du système d'échange des réservoirs amovibles, un des intérêts de l'invention est que des réservoirs amovibles pourront être livrés directement à l'utilisateur (domicile, lieu de travail ou autres) facilitant ainsi considérablement la fourniture d'hydrogène à l'utilisateur partout et à toute heure. Une façon disruptive de faire un plein d'énergie pour un véhicule par rapport aux méthodes de recharge habituelles d'essence ou de gaz divers.

Il va maintenant être fait référence aux figures 9 et 10 pour présenter une autre caractéristique particulière dont est équipé le véhicule conforme à l'invention.

Il est connu que les véhicules électriques fonctionnant à l'hydrogène doivent répondre à des normes de sécurité visant à empêcher tout risque d'explosion du véhicule en cas de collision par l'arrière du véhicule en particulier.

Le véhicule conforme à l'invention prévoit des moyens qui assurent un mouvement des réservoirs amovibles lors d'une collision arrière du véhicule, pour transformer une partie de l'énergie du choc reçu en mouvement et limiter l'impact du choc sur les réservoirs amovibles (les préserver au maximum).

La figure 9 illustre l'arrière d'un véhicule conforme à l'invention, avec son coffre 2, son grand compartiment 3 - situé sous le coffre - avec sa porte d'accès 30 (le grand compartiment 3 comportant les compartiments individuels 4 accueillant chacun les réservoirs amovibles 5).

On remarque un bandeau 31 formée par une partie de carrosserie, entre la porte d'accès 30 du grand compartiment 3 et la porte du coffre 2.

La bandeau 31 est un bandeau de carrosserie qui forme un fusible, capable d'absorber une partie de l'énergie générée lors d'un choc en se détruisant, par exemple lors du choc.

Un mur impactant est représenté schématiquement par la référence 80. Conformément à un mode de réalisation avantageux, le véhicule comporte également un organe de sécurité interne au véhicule, qui est conçu pour forcer le ou les réservoirs amovibles 5 à pivoter autour d'une extrémité dudit rail 7 et à se positionner suivant une direction sensiblement :
La figure 10 illustre schématique un tel organe de sécurité 32, qui est placé au moins partiellement sous le (ou les) rail(s) 7.

L'organe de sécurité 32 est conçu pour former un poussoir en cas de choc arrière du véhicule, qui force le pivot du réservoir amovible 5 (ou des réservoirs amovibles 5).

Pour ce faire, l'organe de sécurité 32 comporte une première partie d'organe 33 apte à se déformer plastiquement (la première partie d'organe se déforme comme un accordéon, et emmagasine l'énergie).

On prévoit de prolonger la première partie d'organe 33 par une seconde partie d'organe 34 qui est placée sous le rail et qui est conçue pour se déplacer sous l'action d'une poussée de ladite première partie d'organe 33.

Pour ce faire, la seconde partie d'organe est conçue dans un matériau plus résistant, qui force le déplacement de cette seconde partie (sous l'action du déplacement même de la première partie d'organe 33 après sa déformation plastique) avant son éventuelle déformation et éventuelle destruction, pour pousser sur le rail et forcer le pivot P de celui-ci autour d'un axe de pivot Y, entrainant le positionnement du réservoir amovible 5 positionné au-dessus du rail suivant une position verticale ou au moins en position inclinée se rapprochant d'une position verticale.

L'organe de sécurité32, combiné au bandeau 31, permet de préserver au mieux les reversoirs amovibles 5 et permet de les extraire du véhicule.

On comprend de la description qui précède comme l'invention propose un nouveau véhicule électrique fonctionnant à l'hydrogène qui offre plus de performances grâce à la présence de plusieurs réservoirs amovibles, comment un tel véhicule propose des solutions permettant à l'utilisateur de gagner du temps lorsqu'il doit faire le plein en hydrogène, et de pouvoir faire le plein partout grâce à de simples distributeurs ou en se faisant livrer des réservoirs amovibles là où l'utilisateur se trouve, proposant une solution simple et sécurisée pour le remplacement des réservoirs amovibles et offrant des caractéristiques de sécurité optimum.

Il devra être compris que l'invention pourrait présenter des variantes de réalisation qui n'ont pas été présentées ci-avant et qu'elle s'étend à la mise en œuvre de moyens équivalents.

## Revendications

1. Réservoir amovible (5) rechargeable, pour véhicule (1) notamment automobile électrique, ledit réservoir comportant un corps (50) apte à contenir un gaz sous pression et un premier connecteur (52) de délivrance, fixé à une première extrémité (51) dudit corps (50) de réservoir et apte à être associé à un second connecteur (10) dont est équipé un véhicule automobile, l'association des premier et second connecteurs (52, 10) autorisant une entrée et/ ou une sortie dudit gaz sous pression dans et/ou hors dudit corps (50) dudit réservoir, ledit réservoir amovible (5) étant
**caractérisé en ce que** ledit corps (50) de réservoir est de forme allongée et présente un axe (X) de corps,
**en ce que** ledit corps (50) est entouré d'une enveloppe latérale (54) de protection dudit corps (50), ladite enveloppe latérale (54) étant coaxiale audit corps (50) et comportant :
- une premier extrémité d'enveloppe (61), entourant au moins partiellement ladite première extrémité (51) de corps, ladite première extrémité d'enveloppe (61) étant ouverte pour livrer accès audit premier connecteur (52) de délivrance dudit corps (50) dudit réservoir,
- une seconde extrémité d'enveloppe (63), entourant au moins partiellement une seconde extrémité (53) dudit corps (50) et comprenant une poignée (54) de préhension dudit réservoir,
ladite enveloppe (54) comportant au moins deux éléments de prise (62, 64), alignés suivant une direction parallèle à l'axe (X) dudit corps (50) dudit réservoir, les deux éléments de prise (62, 64) étant aptes à associer ladite enveloppe (54) avec une navette (6) de positionnement, pour faire reposer ledit réservoir amovible (5) sur ladite navette (6).

2. Réservoir amovible rechargeable selon la revendication 1, **caractérisé en ce que** ladite première extrémité d'enveloppe (61) s'étend au-delà de ladite première extrémité (51) de corps (50) et forme une jupe (62) de protection autour de ladite première extrémité (51) de corps (50), ladite jupe (62) constituant un premier élément de prise, apte à venir en prise avec un premier élément d'accrochage (71) de ladite navette (6).

3. Réservoir amovible selon la revendication 1 ou 2, **caractérisé en ce que** ladite enveloppe (54) comporte un logement (64) apte à recevoir un pion (74) de ladite navette (6), ledit logement (64) constituant un second élément de prise.

4. Réservoir amovible selon l'une quelconque des revendications précédentes, **caractérisé en ce que** ladite enveloppe (54) comporte une seconde poignée (56).

5. Réservoir selon la revendication 4, **caractérisé en ce que** ladite seconde poignée (56) est au moins partiellement escamotable dans une épaisseur de ladite enveloppe.

6. Réservoir amovible selon l'une quelconque des revendications précédentes, **caractérisé en ce que** ladite seconde extrémité d'enveloppe (63) s'étend au-delà de ladite seconde extrémité (53) de corps (50) et définit un volume prolongeant ledit corps et **en ce que** ladite première poignée (55) est formée dans ledit volume prolongeant ledit corps (50).

7. Réservoir amovible selon l'une quelconque des revendications précédentes, **caractérisé en ce que** ledit corps (50) présente une masse globale comprise entre sensiblement 1 et 30 Kg.

8. Réservoir amovible selon l'une quelconque des revendications précédentes, **caractérisé en ce que** ledit corps (50) est équipé d'une soupape de surpression et/ou d'un capteur de pression et/ou d'un capteur de température.

9. Réservoir amovible selon l'une quelconque des revendications précédentes, **caractérisé en ce que** ladite enveloppe (54) est équipée d'un dispositif d'affichage (57, 58), apte à indiquer une jauge dudit corps (50) et **en ce que** ladite enveloppe (54) comprend au moins un témoin d'indication de disfonctionnement dudit premier connecteur (52).

10. Réservoir amovible selon l'une quelconque des revendications précédentes, **caractérisé en ce que** ladite enveloppe (54) présente une section de forme polygonale.

11. Véhicule notamment automobile, **caractérisé en ce qu'**il comporte au moins un réservoir amovible (5) selon l'une quelconque des revendications précédentes, comportant en outre au moins un compartiment (3 ; 4), pour accueillir ledit au moins un réservoir amovible (5),
ledit au moins un compartiment (3, 4) étant équipé dudit au moins un second connecteur (10), apte à s'associer avec ledit premier connecteur (52) dudit réservoir amovible (5),
ledit au moins un compartiment (3 ; 4) comportant au moins une navette (6) de positionnement dudit au moins un réservoir (5), ladite navette (6) étant montée mobile en déplacement sur un rail (7), entre une position d'accueil dudit au moins un réservoir (5) et une position de connexion dudit au moins un réservoir avec ledit second connecteur (10),
ladite navette (6) comportant des premier et second éléments d'accrochage (71 ; 74), venant en prise avec respectivement lesdits au moins deux éléments de prise (62, 64) dudit au moins un réservoir amovible (5),
et **caractérisé en ce que** ledit véhicule comporte un dispositif motorisé apte à commander le déplacement de ladite navette (6) sur ledit rail (7), entre ladite position de connexion et ladite position d'accueil, et inversement.

12. Véhicule selon la revendication 11, **caractérisé en ce que** ledit rail (7) est orienté suivant une position inclinée par rapport à une direction horizontale quand ledit véhicule repose sur un sol horizontal.

13. Véhicule selon la revendication 11 ou 12, **caractérisé en ce que** ledit au moins un compartiment (3 ; 4) est situé sous un coffre (2) dudit véhicule (1) et **en ce que** ledit compartiment (3 ; 4) comprend une première porte d'entrée (30) qui est indépendante d'une seconde porte d'entrée du coffre (2).

14. Véhicule selon la revendication 13, **caractérisé en ce que** première porte d'entrée (30) du compartiment (3 ; 4) est placée à une distance prédéterminée d'au moins 40 cm d'une entrée d'un compartiment individuel (4) d'accueil dudit réservoir amovible, ladite entrée dudit au moins un compartiment individuel (4) étant définie par une extrémité dudit rail (7), ledit compartiment (3) comportant ledit compartiment individuel (4).

15. Véhicule selon l'une quelconque des revendications 11 à 14, **caractérisé en ce que** ledit compartiment (3) comporte plusieurs compartiments individuels (4), chacun des compartiments individuels comprenant un rail (7), une navette (6), un second connecteur (10) et un dispositif motorisé pour positionner le réservoir amovible, et aider à l'extraction dudit réservoir amovible (5).

16. Véhicule selon l'une quelconque des revendications 11 à 15, **caractérisé en ce qu'**il comporte un réservoir fixe (8), ledit au moins un réservoir amovible (5) et ledit réservoir fixe (8) étant reliés respectivement à des circuits (11, 12) d'amenée et de délivrance de gaz sous pression, lesdits circuits étant parallèles entre eux, associés à une entrée commune (13) et une sortie commune (14) et étant équipés de dispositif bypass autorisant le passage du gaz sous pression soit dans un circuit (11) soit dans un autre (12).

17. Véhicule selon l'une quelconque des revendications 11 à 16, **caractérisé en ce qu'**il comporte au moins un organe de sécurité (32), placé au moins partiellement sous ledit au moins un rail (7), ledit au moins un organe de sécurité (32) formant poussoir en cas de choc arrière du véhicule (1), pour forcer ledit au moins un réservoir amovible (5) à pivoter autour d'un axe d'extrémité (Y) dudit rail et à se positionner suivant une direction sensiblement verticale quand le véhicule (1) est positionné sur un support horizontal.

18. Véhicule selon la revendication 17, **caractérisé en ce que** ledit au moins un organe de sécurité (32) comporte une première partie d'organe (33) apte à se déformer plastiquement, ladite première partie d'organe (33) étant prolongée par une seconde partie d'organe (34), apte à se déplacer sous l'action d'une poussée de ladite première partie d'organe (33), après la déformation plastique de ladite première partie d'organe (33), en cas de choc arrière du véhicule.

## Patentansprüche

1. Beweglicher, nachfüllbarer Behälter (5) für ein Fahrzeug (1), insbesondere ein Elektrofahrzeug, wobei der Behälter einen Körper (50) aufweist, der geeignet ist, ein Druckgas zu enthalten, und einen ersten Abgabeanschluss (52), der an einem ersten Ende (51) des Behälterkörpers (50) befestigt ist und mit einem zweiten Anschluss (10) verbunden werden kann, mit dem ein Kraftfahrzeug ausgestattet ist, wobei die Verbindung zwischen dem ersten und dem zweiten Anschluss (52, 10) den Eintritt und/oder Austritt des Druckgases in den und/oder aus dem Körper (50) des Behälters ermöglicht, wobei der bewegliche Behälter (5)
**dadurch gekennzeichnet ist, dass** der Behälterkörper (50) länglich geformt ist und einen Achsenkörper (X) aufweist,
und dadurch, dass der Körper (50) von einer Seitenhülle (54) zum Schutz des Körpers (50) umgeben ist, wobei die Seitenhülle (54) koaxial zu dem Körper (50) ist und Folgendes umfasst:
- ein erstes Hüllenende (61), das das erste Körperende (51) mindestens teilweise umgibt, wobei das erste Körperende (61) geöffnet ist, um Zugang zum ersten Abgabeanschluss (52) des Körpers (50) des Behälters zu ermöglichen,
- ein zweites Hüllenende (63), das mindestens teilweise ein zweites Ende (53) des Körpers (50) umgibt und einen Griff (54) zum Greifen des Behälters umfasst,
wobei die Hülle (54) mindestens zwei Greifelemente (62, 64) umfasst, die in einer Richtung parallel zur (X) Achse des Körpers (50) des Behälters ausgerichtet sind, wobei die zwei Greifelemente (62, 64) dazu geeignet sind, die Hülle (54) mit einem Positionierungs-Shuttle (6) zu verbinden, um den beweglichen Behälter (5) auf das Shuttle (6) aufzulegen.

2. Beweglicher nachfüllbarer Behälter nach Anspruch 1, **dadurch gekennzeichnet, dass** sich das erste Hüllenende (61) über das erste Ende (51) des Körpers (50) hinaus erstreckt und einen Schutzmantel (62) um das erste Ende (51) des Körpers (50) bildet, wobei der Mantel (62) ein erstes Greifelement darstellt, das mit einem ersten Einhängeelement (71) des Shuttles (6) in Eingriff kommen kann.

3. Beweglicher Behälter nach Anspruch 1 oder 2, **dadurch gekennzeichnet, dass** die Hülle (54) eine Aufnahme (64) aufweist, die geeignet ist, einen Stift (74) des Shuttles (6) aufzunehmen, wobei die Aufnahme (64) ein zweites Aufnahmeelement darstellt.

4. Beweglicher Behälter nach einem der vorhergehenden Ansprüche, **dadurch gekennzeichnet, dass** die Hülle (54) einen zweiten Griff (56) aufweist.

5. Behälter nach Anspruch 4, **dadurch gekennzeichnet, dass** der zweite Griff (56) mindestens teilweise in eine Dicke der Hülle versenkbar ist.

6. Beweglicher Behälter nach einem der vorhergehenden Ansprüche, **dadurch gekennzeichnet, dass** sich das zweite Hüllenende (63) über das zweite Ende (53) des Körpers (50) erstreckt und ein den Körper verlängerndes Volumen definiert und dass der erste Griff (55) in dem den Körper (50) verlängernden Volumen ausgebildet ist.

7. Beweglicher Behälter nach einem der vorhergehenden Ansprüche, **dadurch gekennzeichnet, dass** der Körper (50) eine Gesamtmasse zwischen im Wesentlichen 1 und 30 kg aufweist.

8. Beweglicher Behälter nach einem der vorhergehenden Ansprüche, **dadurch gekennzeichnet, dass** der Körper (50) mit einem Überdruckventil und/oder einem Drucksensor und/oder einem Temperatursensor ausgestattet ist.

9. Beweglicher Behälter nach einem der vorhergehenden Ansprüche, **dadurch gekennzeichnet, dass** die Hülle (54) mit einer Anzeigevorrichtung (57, 58) ausgestattet ist, die geeignet ist, einen Standanzeiger des Körpers (50) anzuzeigen, und dass die Hülle (54) mindestens eine Fehlfunktions-Anzeigeleuchte des ersten Anschlusses (52) umfasst.

10. Beweglicher Behälter nach einem der vorhergehenden Ansprüche, **dadurch gekennzeichnet, dass** die Hülle (54) einen polygonal geformten Querschnitt aufweist.

11. Fahrzeug, insbesondere Kraftfahrzeug, **dadurch gekennzeichnet, dass** es mindestens einen beweglichen Behälter (5) nach einem der vorhergehenden Ansprüche aufweist, ferner mindestens ein Fach (3; 4) aufweist, um den mindestens einen beweglichen Behälter (5) aufzunehmen,
wobei das mindestens eine Fach (3, 4) mit dem mindestens einen zweiten Anschluss (10) ausgestattet ist, der geeignet ist, mit dem ersten Anschluss (52) des beweglichen Behälters (5) verbunden zu werden,
wobei das mindestens eine Fach (3; 4) mindestens ein Shuttle (6) zur Positionierung des mindestens einen Behälters (5) umfasst, wobei das Shuttle (6) beweglich auf einer Schiene (7) zwischen einer Aufnahmeposition des mindestens einen Behälters (5) und einer Verbindungsposition des mindestens einen Behälters mit dem zweiten Anschluss (10) montiert ist,
wobei das Shuttle (6) erste und zweite Einhängeelemente (71; 74) aufweist, die jeweils mit den mindestens zwei Greifelementen (62, 64) des mindestens einen beweglichen Behälters (5) in Eingriff kommen, und **dadurch gekennzeichnet, dass** das Fahrzeug eine motorisierte Vorrichtung umfasst, die geeignet ist, die Bewegung des Shuttles (6) auf der Schiene (7) zwischen der Verbindungsposition und der Aufnahmeposition und umgekehrt zu steuern.

12. Fahrzeug nach Anspruch 11, **dadurch gekennzeichnet, dass** die Schiene (7) in einer schrägen Position zu einer horizontalen Richtung ausgerichtet ist, wenn das Fahrzeug auf einem horizontalen Boden aufliegt.

13. Fahrzeug nach Anspruch 11 oder 12, **dadurch gekennzeichnet, dass** sich das mindestens eine Fach (3; 4) unter einem Kofferraum (2) des Fahrzeugs (1) befindet und dass das Fach (3; 4) eine erste Eingangstür (30) umfasst, die unabhängig von einer zweiten Eingangstür des Kofferraums (2) ist.

14. Fahrzeug nach Anspruch 13, **dadurch gekennzeichnet, dass** die erste Eingangstür (30) des Fachs (3; 4) in einem vorbestimmten Abstand von mindestens 40 cm zu einem Eingang eines Einzelfachs (4) zur Aufnahme des beweglichen Behälters angeordnet ist, wobei der Eingang des mindestens einen Einzelfachs (4) durch ein Ende der Schiene (7) definiert ist, wobei das Fach (3) das Einzelfach (4) umfasst.

15. Fahrzeug nach einem der Ansprüche 11 bis 14, **dadurch gekennzeichnet, dass** das Fach (3) mehrere Einzelfächer (4) aufweist, wobei jedes der Einzelfächer eine Schiene (7), ein Shuttle (6), einen zweiten Anschluss (10) und eine motorisierte Vorrichtung zum Positionieren des beweglichen Behälters umfasst und das Herausziehen des beweglichen Behälters (5) unterstützt.

16. Fahrzeug nach einem der Ansprüche 11 bis 15, **dadurch gekennzeichnet, dass** es einen festen Behälter (8) umfasst, wobei der mindestens eine bewegliche Behälter (5) und der feste Behälter (8) jeweils mit Druckgaszufuhr- und -abgabekreisen (11, 12) verbunden sind, wobei die Kreise parallel zueinander sind, mit einem gemeinsamen Eingang (13) und einem gemeinsamen Ausgang (14) verbunden sind und mit einer Bypassvorrichtung ausgestattet sind, die den Durchgang des Druckgases entweder in einen Kreis (11) oder in einen anderen Kreis (12) ermöglicht.

17. Fahrzeug nach einem der Ansprüche 11 bis 16, **dadurch gekennzeichnet, dass** es mindestens ein Sicherheitselement (32) umfasst, das mindestens teilweise unter der mindestens einen Schiene (7) angeordnet ist, wobei das mindestens eine Sicherheitselement (32) bei einem Heckaufprall des Fahrzeugs (1) einen Stößel bildet, um den mindestens einen beweglichen Behälter (5) zu zwingen, um eine Endachse (Y) der Schiene zu schwenken und sich in einer im Wesentlichen vertikalen Richtung zu positionieren, wenn das Fahrzeug (1) auf einer waagrechten Unterlage positioniert ist.

18. Fahrzeug nach Anspruch 17, **dadurch gekennzeichnet, dass** das mindestens eine Sicherheitsorgan (32) einen ersten Organteil (33) umfasst, der plastisch verformbar ist, wobei der erste Organteil (33) durch einen zweiten Organteil (34) verlängert wird, der in der Lage ist, sich nach der plastischen Verformung des ersten Organteils (33) bei einem Heckaufprall des Fahrzeugs unter Krafteinwirkung des ersten Organteils (33) zu bewegen.

## Claims

1. A refillable removable tank (5) for a vehicle (1), in particular an electric motor vehicle, said tank comprising a body (50) suitable for containing a pressurized gas and a first delivery connector (52), attached to a first end (51) of said tank body (50) and suitable for being associated with a second connector (10) for a motor vehicle, the association of the first and second connectors (52, 10) allowing said pressurized gas to enter into and/or exit from said body (50) of said tank, said removable tank (5) being
**characterized in that** said tank body (50) is elongated and has a body axis (X),
**in that** said body (50) is surrounded by a lateral protective shell (54) of said body (50), said lateral shell (54) being coaxial with said body (50) and comprising:
- a first shell end (61), at least partially surrounding said first body end (51), said first shell end (61) being open to provide access to said first delivery connector (52) of said body (50) of said tank,
- a second shell end (63), at least partially surrounding a second end (53) of said body (50) and comprising a handle (54) for gripping said tank,
said shell (54) comprising at least two gripping elements (62, 64), aligned in a direction parallel to the axis (X) of said body (50) of said tank, the two gripping elements (62, 64) being suitable for associating said shell (54) with a positioning shuttle (6), to make said removable tank (5) rest on said shuttle (6).

2. The refillable removable tank according to claim 1, **characterized in that** said first shell end (61) extends beyond said first body (50) end (51) and forms a protective skirt (62) around said first body (50) end (51), said skirt (62) constituting a first engagement element, suitable for engaging with a first coupling element (71) of said shuttle (6).

3. The removable tank according to claim 1 or 2, **characterized in that** said shell (54) comprises a housing (64) suitable for receiving a pin (74) of said shuttle (6), said housing (64) constituting a second engagement element.

4. The removable tank according to any one of the preceding claims, **characterized in that** said shell (54) comprises a second handle (56).

5. The tank according to claim 4, **characterized in that** said second handle (56) is at least partially retractable into a thickness of said shell.

6. The removable tank according to any one of the preceding claims, **characterized in that** said second shell end (63) extends beyond said second body (50) end (53) and defines a volume extending said body and **in that** said first handle (55) is formed in said volume extending said body (50).

7. The removable tank according to any one of the preceding claims, **characterized in that** said body (50) has an overall mass of between approximately 1 and 30 kg.

8. The removable tank according to any one of the preceding claims, **characterized in that** said body (50) is equipped with a pressure relief valve and/or a pressure sensor and/or a temperature sensor.

9. The removable tank according to any one of the preceding claims, **characterized in that** said shell (54) is equipped with a display device (57, 58), suitable for indicating a gauge of said body (50) and **in that** said shell (54) comprises at least one warning light for indicating a malfunction of said first connector (52).

10. The removable tank according to any one of the preceding claims, **characterized in that** said shell (54) has a polygonal cross-section.

11. A vehicle, in particular a motor vehicle, **characterized in that** it comprises at least one removable tank (5) according to any one of the preceding claims, further comprising at least one compartment (3; 4) for receiving said at least one removable tank (5),
said at least one compartment (3, 4) being equipped with said at least one second connector (10), suitable for associating with said first connector (52) of said removable tank (5),
said at least one compartment (3; 4) comprising at least one shuttle (6) for positioning said at least one tank (5), said shuttle (6) being movably mounted on a rail (7) between a position for receiving said at least one tank (5) and a position for connecting said at least one tank to said second connector (10), said shuttle (6) comprising first and second coupling elements (71; 74), respectively engaging with said at least two engagement elements (62, 64) of said at least one removable tank (5),
and **characterized in that** said vehicle comprises a motorized device capable of controlling the movement of said shuttle (6) on said rail (7), between said connection position and said receiving position, and vice versa.

12. The vehicle according to claim 11, **characterized in that** said rail (7) is oriented in an inclined position with respect to a horizontal direction when said vehicle rests on horizontal ground.

13. The vehicle according to claim 11 or 12, **characterized in that** said at least one compartment (3; 4) is located under a trunk (2) of said vehicle (1) and **in that** said compartment (3; 4) comprises a first entrance door (30) which is independent of a second entrance door to the trunk (2).

14. The vehicle according to claim 13, **characterized in that** the first entrance door (30) to the compartment (3; 4) is located at a predetermined distance of at least 40 cm from an entrance to an individual compartment (4) for receiving said removable tank, said entrance to said at least one individual compartment (4) being defined by one end of said rail (7), said compartment (3) comprising said individual compartment (4).

15. The vehicle according to any one of claims 11 to 14, **characterized in that** said compartment (3) comprises a plurality of individual compartments (4), each of the individual compartments comprising a rail (7), a shuttle (6), a second connector (10) and a motorized device for positioning the removable tank, and assisting in the extraction of said removable tank (5).

16. The vehicle according to any one of claims 11 to 15, **characterized in that** it comprises a fixed tank (8), said at least one removable tank (5) and said fixed tank (8) being connected respectively to circuits (11, 12) for supplying and delivering pressurized gas, said circuits being parallel to one another, associated with a common inlet (13) and a common outlet (14) and being equipped with a bypass device allowing pressurized gas to pass either into one circuit (11) or into another (12).

17. The vehicle according to any one of claims 11 to 16, **characterized in that** it comprises at least one safety member (32), placed at least partially under said at least one rail (7), said at least one safety member (32) forming a pusher in the event of a rear impact to the vehicle (1), to force said at least one removable tank (5) to pivot about an end axis (Y) of said rail and to position itself in a substantially vertical direction when the vehicle (1) is positioned on a horizontal support.

18. The vehicle according to claim 17, **characterized in that** said at least one safety member (32) comprises a first member part (33) capable of plastic deformation, said first member part (33) being extended by a second member part (34), capable of moving under the action of a thrust of said first member part (33), after the plastic deformation of said first member part (33), in the event of a rear impact to the vehicle.
